# EUROPÄISCHE PATENTSCHRIFT

(11) **EP 3 363 527 B1**
(45) Veröffentlichungstag und Bekanntmachung des Hinweises auf die Patenterteilung: **17.08.2022**
(21) Anmeldenummer: 17205953.7
(22) Anmeldetag: 07.12.2017
(51) Int. Cl.: B01D 63/16, B01D 71/02

(54) **VERFAHREN ZUM BETRIEB EINER FILTRATIONSANLAGE**
METHOD FOR OPERATING A FILTRATION SYSTEM
PROCÉDÉ DE FONCTIONNEMENT D'UNE INSTALLATION DE FILTRAGE

(30) Priorität: 16.02.2017 DE 102017001542
(43) Veröffentlichungstag der Anmeldung: 22.08.2018
(73) Patentinhaber: Rauschert Kloster Veilsdorf GmbH, 96110 Scheßlitz (DE)
(72) Erfinder: METZLER, Richard, 96332 Pressig (DE); WÖLFEL, Tobias Rudi, 96224 Burgkunstadt (DE)
(74) Vertreter: Behr, Wolfgang

(56) Entgegenhaltungen:
- DE-A1-102009 010 484
- FR-A1- 2 799 391
- US-A- 3 997 447
- US-A- 5 173 190
- US-A- 5 370 793
- US-A1- 2011 100 910

## Beschreibung

Die vorliegende Erfindung betrifft ein Verfahren zum Betrieb einer Filtrationsanlage mit einem Behälter, in welchen die zu filtrierende Flüssigkeit einströmt und/oder aus welchem das Retentat abströmt, und mit mehreren Filtrationsscheiben, welche in dem Behälter auf einer drehbaren Welle angeordnet sind, sowie eine entsprechende Filtrationsanlage.

Die in der Filtrationsanlage eingesetzten Filtrationsscheiben weisen jeweils einen Grundkörper, eine auf den Außenseiten des Grundkörpers angeordnete keramische Membran und eine Axialbohrung auf, wobei die Axialbohrungen den Permeat-Abfluss der Filtrationsscheiben bilden und mit einem in der Welle angeordneten Abflusskanal in Verbindung stehen.

Solche keramischen Filtrationsscheiben sind aus der DE 43 301 63 C2, der DE 19 624 176 C2 und der EP 2 543 420 A1 bekannt. Die Herstellung der Filtrationsscheiben erfolgt in diesem Fall durch Lamination mehrerer keramischer Folien. Die jeweils äußeren Folien bilden die Membran, und eine innere Folie bildet einen Grundkörper, welcher der Ableitung des Permeats dient.

Aus der DE 10 2016 011 672.2 sind ebenfalls keramische Filtrationsscheiben bekannt, bei welchen der Grundkörper aus einer porösen Keramik besteht. Die Herstellung erfolgt dadurch, dass in einem ersten Schritt der Grundkörper geformt und gesintert wird, und dass in einem zweiten Schritt die Membran in einer oder mehreren Schichten als Schlicker auf den bereits gesinterten Grundkörper aufgebracht und zusammen mit dem Grundkörper nochmals gesintert wird. In einer ersten Ausführungsform wird der Grundkörper im Gießverfahren aus einem Keramikschaum hergestellt. In einer alternativen Ausführungsform erfolgt die Herstellung des Grundkörpers im Trockenpressverfahren aus einem keramischen Granulat. Keramische Filtrationsscheiben gemäß der DE 10 2016 011 672.2 werden im Rahmen der vorliegenden Erfindung bevorzugt, da ihre Herstellung erheblich günstiger ist und eine größere Freiheit bei der Formgestaltung des Grundkörpers erlaubt.

Filtrationsanlagen, wie sie oben beschrieben wurden, ermöglichen eine verfahrenstechnisch besonders einfache Filtration, da durch die Rotation der Filtrationsscheiben die Entstehung von organischen, anorganischen, aber auch bakteriellen Deckschichten bzw. Verblockungen auf der Membranoberfläche minimiert werden kann. Weiterhin kann die Filtration bereits bei relativ niedrigen Drücken erfolgen. Bei dem beschriebenen Verfahren mittels Rotationsscheiben entfällt aufgrund der Drehbewegung der Membran weiterhin eine energieintensive Umwälzpumpe, welche bei gängigen Cross-Flow-Verfahren für die Überströmungsgeschwindigkeit verantwortlich ist.

Druckschrift DE 10 2009 010 484 A1 zeigt eine Filtrationsanlage mit mehreren Wellen, auf welchen Membranfilterscheiben angeordnet sind.

Druckschrift US 3 997 447 A zeigt ein Verfahren gemäß dem Oberbegriff von Anspruch 1 sowie eine Filtrationsanlage gemäß dem Oberbegriff von Anspruch 8. Weiterhin ist dort angegeben, dass eine solche Anlage alternativ auch zum Begasen von Flüssigkeiten eingesetzt werden kann.

Druckschrift FR 2 799 391 A1 zeigt eine Filtrationsanlage mit bevorzugt propellerförmigen, auf einer Welle angeordneten Membranfilterelementen. Weiterhin sind unterhalb der Membranfilterelemente Gasdüsen zum Begasen der zu filtrierenden Flüssigkeit angeordnet.

Druckschriften US 5 370 793 A, US 5 173 190 A und US 2011/100910 A1 zeigen weitere Verfahren zum Reinigen von Membranen.

Aufgabe der vorliegenden Erfindung ist die verfahrenstechnische Verbesserung des Betriebs einer Filtrationsanlage und die konstruktive Verbesserung der Filtrationsanlage.

Diese Aufgabe wird durch ein Verfahren gemäß Anspruch 1 und eine Filtrationsanlage gemäß dem unabhängigen Anspruch 6 gelöst. Bevorzugte Ausgestaltungen sind Gegenstand der Unteransprüche.

In einem ersten Aspekt umfasst die vorliegende Erfindung ein Verfahren zum Betrieb einer Filtrationsanlage mit einem Behälter, in welchen die zu filtrierende Flüssigkeit einströmt und/oder aus welchem das Retentat abströmt, und mit Filtrationsscheiben, welche in dem Behälter auf einer drehbaren Welle angeordnet sind. Dabei weisen die Filtrationsscheiben jeweils einen Grundkörper, eine auf den Außenseiten des Grundkörpers angeordnete keramischen Membran und eine Axialbohrung auf, wobei die Axialbohrungen den Permeat-Abfluss der Filtrationsscheiben bilden und mit einem in der Welle angeordneten Abflusskanal in Verbindung stehen. Das erfindungsgemäße Verfahren sieht vor, dass abwechselnd eine Filtration und Begasung der zu filtrierenden Flüssigkeit erfolgt, wobei bei der Filtration das Permeat aus den Filtrationsscheiben über die Welle abfließt und bei der Begasung Gas über die Welle und die Filtrationsscheiben in die zu filtrierende Flüssigkeit eingebracht wird. Bei der Begasung wird bevorzugt das Gas durch die poröse Membran der Filtrationsscheibe fein in der Lösung dispergiert.

Die Begasung kann der Behandlung der zu filtrierenden Flüssigkeit dienen, bspw. durch Oxidation. Andererseits trägt die Begasung bzw. Belüftung im Filtrationsbetrieb zur Reinigung bzw. Regeneration der Keramikmembran bei, sodass eine hohe Betriebssicherheit und -laufzeit gewährleistet werden kann.

Bei dem Gas, welches während der Begasung in die zu filtrierende Flüssigkeit eingebracht wird, kann es sich bspw. um Ozon und/oder Sauerstoff handeln.

Durch die Kombination von Begasung und Filtration in einer Einheit erfolgt eine äußerst kompakte Bauweise. Beispielsweise in der kommunalen Klärwerkstechnik oder den zukunftsweisenden AOP-Verfahren werden diese beiden Aufgaben zur Zeit von unterschiedlichen Aggregaten bewältigt.

Die vorliegende Erfindung umfasst daher insbesondere den Einsatz des Erfindungsgemäßen Verfahrens bzw. der erfindungsgemäßen Filtrationsanlage in einem Klärwerk, insbesondere einem Klärwerk zur Behandlung kommunaler Abwässer, und/oder im Rahmen eines erweiterten Oxidationsprozesses (Advanced Oxidation Process), wobei die Oxidation bevorzugt durch das über die Filtrationsscheiben in die zu filtrierende Flüssigkeit eingebrachte Gas erfolgt.

Bevorzugt rotiert die Welle mit den auf der Welle angeordneten Filtrationsscheiben zumindest bei der Filtration. Dies erzeugt eine Verwirbelung und damit eine Scherkraft, durch welche die bei der Filtration entstehende Deckschicht kontrolliert wird. Weiterhin kann die Welle mit den Filtrationsscheiben auch bei der Begasung rotieren.

Beispielsweise kann die Welle dabei durchgehend rotieren, während abwechselnd eine Begasung und Filtration erfolgt.

Erfindungsgemäß weist die Filtrationsanlage mindestens zwei drehbare Wellen mit Filtrationsscheiben auf, welche gemeinsam in dem Behälter angeordnet sind. Bevorzugt verlaufen die beiden Wellen dabei parallel zueinander. Durch die Verwendung von zwei Wellen, an welchen jeweils Filtrationsscheiben angeordnet sind, ergeben sich weitere Verfahrensmöglichkeiten.

Erfindungsgemäß wird jeweils im Wechsel die eine Welle zur Filtration und die andere Welle zu Begasung genutzt. Beispielsweise wird daher in einer ersten Phase die erste Welle zur Filtration und die zweite Welle zur Begasung genutzt. Dann erfolgt ein Wechsel, und in einer zweiten Phase wird die erste Welle zur Begasung und die zweite Welle zur Filtration genutzt. Die erste und die zweite Phase können sich dabei in regelmäßigen Abständen oder anhand von Verfahrensparametern gesteuert abwechseln.

Gemäß einer bevorzugten Ausgestaltung der vorliegenden Erfindung handelt es sich bei dem Behälter, in welchem die Filtrationsscheiben angeordnet sind, um einen Druckbehälter. Dies ermöglicht es, in dem Behälter ein Filtrationsdruck zu erzeugen, welcher die Filtration über die keramischen Filtrationsscheiben unterstützt.

Gemäß einer bevorzugten Ausgestaltung der vorliegenden Erfindung wird der Filtrationsdruck in dem Druckbehälter zumindest teilweise über die Begasung erzeugt. Bevorzugt kann der Druckbehälter hierzu abgeschlossen werden, um über die Begasung den Druck im Druckbehälter zu erhöhen.

Beispielsweise kann die Befüllung des Druckbehälters mit zu filtrierender Flüssigkeit in einem Batch-Verfahren erfolgen. Insbesondere kann im Wechsel eine Befüllung des Druckbehälters mit zu filtrierender Flüssigkeit bei einem ersten Druck und eine Filtration der im Druckbehälter befindlichen Flüssigkeit bei einem zweiten, durch die Begasung erhöhten Druck erfolgen. Bevorzugt wird zur Befüllung des Druckbehälters ein Zufluss geöffnet. Zu Erhöhung des Druckes wird während der Begasung der Zufluss zum Druckbehälter geschlossen.

Das erfindungsgemäße Verfahren erfolgt bevorzugt unter Verwendung einer Filtrationsanlage, wie sie im Folgenden näher beschrieben wird. Insbesondere handelt es sich bei dem erfindungsgemäßen Verfahren gemäß dem ersten Aspekt dabei um ein Verfahren zum Betrieb einer Filtrationsanlage gemäß dem im Folgenden beschriebenen, zweiten, dritten und/oder vierten Aspekt der vorliegenden Erfindung.

In einem zweiten Aspekt umfasst die vorliegende Erfindung eine Filtrationsanlage mit einem Behälter, in welchen die zu filtrierende Flüssigkeit einströmt und/oder aus welchem das Retentat abströmt, und mit mehreren Filtrationsscheiben, welche in dem Behälter auf einer drehbaren Welle angeordnet sind. Die Filtrationsscheiben weisen jeweils einen Grundkörper, eine auf den Außenseiten des Grundkörpers angeordnete keramische Membran und eine Axialbohrung auf. Dabei bilden die Axialbohrungen den Permeatabfluss der Filtrationsscheiben und stehen mit einem in der Welle angeordneten Abflusskanal in Verbindung. Gemäß dem zweiten Aspekt der vorliegenden Erfindung weist die Filtrationsanlage eine Druckgas-Versorgungseinrichtung auf, welche mit der Welle in Verbindung steht, so dass Gas über die Welle und die Filtrationsscheiben in die zu filtrierende Flüssigkeit eingebracht werden kann. Die Filtrationsanlage gemäß dem zweiten Aspekt ermöglicht insbesondere ein Verfahren zur Filtration gemäß dem ersten Aspekt.

In einer bevorzugten Ausgestaltung kann der in der Welle angeordnete Abflusskanal während des Begasungs-Betriebs zur Zufuhr des Gases zu den Filtrationsscheiben dienen. In einer alternativen Ausführungsform kann die Welle einen separaten Zuflusskanal für das Gas aufweisen. Der Zuflusskanal für das Permeat steht bevorzugt ebenfalls im Bereich der Axialbohrungen mit den Filtrationsscheiben in Verbindung.

Bevorzugt steht die Welle über Ventile mit der Druckgas-Versorgungseinrichtung und einer Permeat-Abflussleitung in Verbindung. Insbesondere kann der Abflusskanal über ein Ventil mit der Permeat-Abflussleitung in Verbindung stehen. Wird der Abflusskanal auch zur Zuführung des Gases zu den Filtrationsscheiben genutzt, so steht dieser bevorzugt über ein Ventil mit der Druckgas-Versorgungseinrichtung in Verbindung. Wird ein separater Zuflusskanal für das Gas genutzt, steht dieser über ein Ventil mit der Druckgas-Versorgungseinrichtung in Verbindung. Die Verbindung der Welle mit der Druckgas-Versorgungseinrichtung und der Permeat-Abflussleitung erfolgt bevorzugt außerhalb des Behälters.

Wird der Abflusskanal auch zur Zuführung des Gases genutzt, so kann der Abflusskanal einfach durch das Innere der als Hohlwelle ausgeführten Welle gebildet sein. Die Hohlwelle weist bevorzugt im Bereich der keramischen Filtrationsscheiben eine oder mehrere Öffnungen auf, mit welchen die Filtrationsscheiben jeweils mit ihrer Axialbohrung mit dem Inneren der Welle in Verbindung stehen.

Die erfindungsgemäße Filtrationsanlage gemäß dem zweiten Aspekt weist eine Steuerung mit einem Betriebsmodus auf, in welchem abwechselnd eine Filtration und eine Begasung der zu filtrierenden Flüssigkeit erfolgt, wobei bei der Filtration das Permeat aus den Filtrationsscheiben über die Welle abfließt und bei der Begasung Gas über die Welle und die Filtrationsscheiben in die zu filtrierende Flüssigkeit eingebracht wird, wobei die Filtrationsanlage mindestens zwei drehbare Wellen mit Filtrationsscheiben aufweist, welche gemeinsam in dem Behälter angeordnet sind, wobei die beiden Wellen bevorzugt parallel verlaufen, wobei jeweils im Wechsel die eine Welle zur Filtration und die andere Welle zur Begasung genutzt wird. Insbesondere handelt es sich dabei um einen Betriebsmodus zu automaischen Durchführung eines Verfahrens gemäß dem ersten Aspekt, wie es oben beschrieben wurde.

Bevorzugt steuert die Steuerung Ventile an, welche die Welle mit der Druckgas-Versorgungseinrichtung und einer Permeat-Abflussleitung verbinden. Wird die Begasung zum Druckaufbau im Behälter genutzt, kann die Steuerung weiterhin einen Zufluss und/oder Abfluss zum Behälter ansteuern, beispielsweise durch Ansteuerung entsprechender Ventile im Zufluss und/oder im Abfluss des Behälters.

Die Druckgas-Versorgungseinrichtung kann insbesondere eine Druckluft-Versorgungseinrichtung sein, beispielsweise in Form eines Druckluft-Kompressors. Weiterhin kann es sich bei dem Gas gemäß dem ersten und/oder zweiten Aspekt der vorliegenden Erfindung um Druckluft handeln. In alternativen Ausgestaltungen ist jedoch auch der Einsatz anderer gasförmiger Medien möglich, beispielsweise der Einsatz von Sauerstoff oder mit Sauerstoff angereicherter Luft.

In einem dritten Aspekt umfasst die vorliegende Erfindung eine Filtrationsanlage gemäß dem zweiten Aspekt, wobei die Filtrationsanlage mindestens zwei drehbare Wellen mit Filtrationsscheiben aufweist, welche gemeinsam in dem Behälter angeordnet sind. Bevorzugt verlaufen die beiden Wellen dabei parallel. Durch den Einsatz von zwei drehbaren Wellen mit keramischen Filtrationsscheiben ergeben sich zum einen verfahrenstechnische Vorteile, welche bereits oben im Hinblick auf den ersten Aspekt näher beschrieben worden. Zum anderen ergeben sich konstruktive Möglichkeiten, welche im Folgenden näher dargestellt werden.

In einer bevorzugten Ausgestaltung sind die Filtrationsscheiben auf den beiden Wellen in axialer Richtung versetzt angeordnet, wobei die Filtrationsscheiben der einen Welle in radialer Richtung bevorzugt in Zwischenräume zwischen den Filtrationsscheiben der anderen Welle hineinreichen. Bei einem Blick auf die Wellen aus der axialen Richtung gesehen überlappen sich daher die Filtrationsscheiben der beiden Wellen. Diese Anordnung hat zum einen den Vorteil, dass die Wellen sehr platzsparend angeordnet werden. Zudem werden die Scherkräfte erhöht.

In einer ersten Ausführungsform kann die Filtrationsanlage so betrieben werden, dass die beiden Wellen mit der gleichen Drehrichtung arbeiten. Hierdurch erhöht sich die relative Geschwindigkeit zwischen den keramischen Filtrationsscheiben der beiden Wellen, und damit die Scherkräfte. In einer möglichen Ausführungsform kann dies durch einen gemeinsamen Antrieb für die beiden Wellen und ein entsprechendes Getriebe umgesetzt werden.

In einer zweiten Ausführungsform der vorliegenden Erfindung kann die Filtrationsanlage so betrieben werden, dass die beiden Wellen mit entgegengesetzten Drehrichtungen arbeiten. Hierdurch vermindert sich im Bereich der Überlappung zwischen den keramischen Scheiben die Relativgeschwindigkeit. Dies vermindert zwar die Scherkräfte, verringert jedoch auch den Widerstand und damit die Energie, welche zum Betrieb der Filtrationsanlage notwendig ist. Auch diese Ausgestaltung kann durch einen gemeinsamen Antrieb und ein entsprechendes Getriebe umgesetzt werden.

Bevorzugt kann die Filtrationsanlage in einem ersten Betriebsmodus so betrieben werden, dass die beiden Wellen die gleiche Drehrichtung aufweisen, und in einem zweiten Betriebsmodus so betrieben werden, dass die beiden Wellen entgegengesetzte Drehrichtungen aufweisen. Dies kann entweder über einen gemeinsamen Antrieb und ein Schaltgetriebe, oder über getrennte Antriebe mit ansteuerbarer Drehrichtung erfolgen.

Bevorzugt weist die Filtrationsanlage eine Steuerung auf, welche zwischen dem ersten und dem zweiten Betriebsmodus umschalten kann. Bevorzugt erfolgt dabei ein regelmäßiger und/oder anhand von Verfahrensparametern gesteuerter Wechsel zwischen den Betriebsmodi, um beispielsweise im ersten Betriebsmodus die Deckschicht zu verringern, und im zweiten Betriebsmodus mit entgegengesetzten Drehrichtungen Energie zu sparen.

Bevorzugt beträgt bei der Filtrationsanlage gemäß dem dritten Aspekt der Abstand A zwischen den Drehachsen der beiden Wellen weniger als die Summe der Radien der Filtrationsscheiben auf den beiden Wellen, so dass sich diese wie oben beschrieben überlappen. Bevorzugt beträgt der Abstand dabei zwischen dem 1,1 fachen des größten Radius der Filtrationsscheiben und dem 0,9 fachen der Summe der Radien der Filtrationsscheiben.

In einer besonders bevorzugten Ausführungsform weist die Filtrationsanlage mindestens vier drehbare Wellen mit Filtrationsscheiben auf, welche gemeinsam in dem Behälter angeordnet sind. Bevorzugt verlaufen die vier Wellen dabei parallel.

In einer möglichen Ausgestaltung sind die Wellen in einem Viereck angeordnet, wobei die Filtrationsscheiben auf benachbarten Wellen in axialer Richtung versetzt angeordnet sind, während die Filtrationsscheiben auf sich diagonal gegenüberliegenden Wellen in axialer Richtung die gleiche Position aufweisen.

Bevorzugt ist vorgesehen, dass die Filtrationsscheiben einer Welle in radialer Richtung jeweils in die Zwischenräume zwischen den Filtrationsscheiben der beiden benachbarten Wellen eingreifen. Hierdurch ergibt sich eine besonders kompakte Anordnung.

Dass die Wellen in einem Viereck angeordnet sind, bedeutet, dass die Drehachsen der Wellen, betrachtet man sie in axialer Richtung, ein Viereck bilden. Insbesondere können die Mittelpunkte der Wellen dabei ein Rechteck, weiter bevorzugt ein Quadrat bilden.

Bevorzugt ist der Abstand zwischen den Mittelpunkten benachbarter Wellen kleiner als die Summe der Radien der jeweiligen Filtrationsscheiben dieser Wellen, so dass sich die oben beschriebene Überlappung ergibt. Der Abstand zwischen den Drehachsen der sich diagonal gegenüberliegenden Wellen ist dagegen bevorzugt größer als die Summe der jeweiligen Radien der Filtrationsscheiben der Wellen, so dass hier keine Überlappung besteht.

Bevorzugt ist auch hier die Filtrationsanlage in einem ersten Betriebsmodus so betreibbar, dass jeweils benachbarte Wellen mit der gleichen Drehrichtung betrieben werden, und in einem zweiten Betriebsmodus so betreibbar, dass jeweils benachbarte Wellen mit entgegengesetzter Drehrichtung betrieben werden. Dies kann insbesondere so erfolgen, wie dies oben beschrieben wurde. Bevorzugt ist auch hier eine Steuerung vorgesehen, welche zwischen den beiden Betriebsmodi umschaltet.

Die Filtrationsanlage gemäß dem dritten Aspekt kann zur Durchführung eines erfindungsgemäßen Verfahrens gemäß dem ersten Aspekt eingesetzt werden.

Sind zwei Wellen vorgesehen, kann die Begasung so erfolgen, dass abwechselnd eine Welle zur Begasung und die andere Welle zur Filtration eingesetzt wird.

Sind vier Wellen vorgesehen, kann die Begasung so erfolgen, dass zwei sich diagonal gegenüberliegenden Wellen zur Begasung eingesetzt werden, und die anderen beiden sich diagonal gegenüberliegenden Wellen zur Filtration.

Dann kann ein Wechsel erfolgen, so dass die zuvor zur Begasung eingesetzten Welle(n) nun zur Filtration eingesetzt werden und umgekehrt. Auch dieser Betrieb wird bevorzugt über eine Steuerung automatisch angesteuert.

In einem vierten Aspekt umfasst die vorliegende Erfindung eine Filtrationsanlage gemäß dem zweiten oder dritten Aspekt, wobei gemäß dem vierten Aspekt vorgesehen ist, dass die Wand des Abflusskanals als ein Gewinde ausgeführt ist. Hierdurch wird der Flüssigkeitstransport des Permeats durch den Abflusskanal verbessert.

Insbesondere kann die Welle als Hohlwelle ausgeführt sein, so dass das Innere der Hohlwelle den Abflusskanal bildet. Die innere Oberfläche der Hohlwelle weist in diesem Fall das erfindungsgemäße Gewinde auf.

Bevorzugt ist die Filtrationsanlage so betreibbar, dass das Gewinde die Abführung des Permeats nach dem archimedischen Prinzip unterstützt. Insbesondere wird die Drehrichtung der Welle hierfür entsprechend gewählt. Dies kann durch die Ausgestaltung des Antriebs der Welle, oder durch eine entsprechende Ansteuerung des Antriebs erfolgen.

Die Welle kann vertikal ausgerichtet sein, wobei die Drehrichtung der Welle so gewählt wird, dass das Permeat entgegen der Schwerkraft nach dem archimedischen Prinzip abgeführt wird.

Bei einer Kombination zwischen dem dritten und dem vierten Aspekt weisen bevorzugt die Abflusskanäle aller Wellen ein Gewinde auf.

Wird die Drehrichtung während des Betriebs verändert, so wird die Drehrichtung während des Filtrationsbetriebs bevorzugt so gewählt, dass das Gewinde die Abführung des Permeats unterstützt, während die umgekehrte Drehrichtung dann gewählt wird, wenn die Welle zur Begasung eingesetzt wird.

Bevorzugte Ausgestaltungen, welche sich auf alle Aspekte der vorliegenden Erfindung beziehen, werden im Folgenden näher beschrieben:
Die Filtrationsscheiben sind bevorzugt starr mit der Welle verbunden, und werden daher durch die Drehung der Welle in Rotation versetzt. Die Filtrationsanlage weist bevorzugt einen oder mehrere Antriebe zur Rotation der Welle bzw. Wellen auf.

Die Filtrationsscheiben können im Bereich ihrer Axialbohrung mit einem Anschlussstück aus Kunststoff versehen werden, mit welchem sie auf die Welle aufschiebbar sind. Durch das Anschlussstück kann auf eine Präzisionsbearbeitung der Innenbohrung verzichtet werden. Weiterhin kann die Filtrationsscheibe einfach auf die Welle aufgeschoben werden. Bevorzugt wird das Anschlussstück im Spritzgussverfahren hergestellt. Das Anschlussstück kann mit der Filtrationsscheibe verklemmt und/oder verklebt werden.

Mehrere solcher Filtrationsscheiben können unter Zwischenschaltung von Distanzstücken auf eine Welle aufgeschoben werden. Eine feste Verschraubung ist dann nur noch an den Enden der Welle erforderlich. Auf diese Weise kann eine sehr schnelle und einfache Montage und Demontage der Filtrationsscheiben erfolgen.

Die gemäß einem der oben näher beschriebenen Aspekte eingesetzten Filtrationsscheiben weisen bevorzugt eines oder mehrere der folgenden Merkmale auf:
Die Filtrationsscheiben sind bevorzugt rund. Bei der Axialbohrung handelt es sich bevorzugt um eine Mittenbohrung.

Die Membran bedeckt bevorzugt zumindest die beiden Seitenflächen des Grundkörpers und bevorzugt den gesamten Grundkörper bis auf den Bereich der Axialbohrung. Im Bereich der Axialbohrung ist bevorzugt zumindest in Teilbereichen keine Membran vorgesehen, sodass das Permeat aus dem Inneren des Grundkörpers abfließen kann. Besonders bevorzugt ist im Bereich der Axialbohrung überhaupt keine Membran aufgebracht.

Bei der Filtrationsscheibe handelt es sich bevorzugt um eine flache Scheibe. Flach bedeutet in diesem Fall, dass der maximale Durchmesser der Scheibe mindestens 5 mal so groß ist wie die maximale Dicke, vorteilhafterweise mindestens 10 mal so groß, weiterhin vorteilhafterweise mindestens 20 mal so groß.

Der Radius der Filtrationsscheibe beträgt bevorzugt zwischen 5 cm und 60 cm, weiter bevorzugt zwischen 10 cm und 30 cm. Die maximale Dicke der keramischen Filtrationsscheibe in axialer Richtung beträgt bevorzugt zwischen 3 mm und 20 mm, weiter bevorzugt zwischen 5 mm und 10 mm. Die minimale Dicke der Filtrationsscheibe in axialer Richtung beträgt bevorzugt zwischen 2 mm und 20 mm, weiterhin bevorzugt zwischen 4 mm und 10 mm.

Die Filtrationsscheibe kann insbesondere die Form einer runden, sich in einer Ebene erstreckenden dünnen Scheibe aufweisen.

Die Filterfläche der keramischen Filtrationsscheibe beträgt bevorzugt zwischen 0,05 m² und 2 m², weiter bevorzugt zwischen 0,01 m² und 0,05 m².

Die Porengröße der Membran ist bevorzugt geringer als die Porengröße des Grundkörpers. Bevorzugt weist der Grundkörper einen Porendurchmesser zwischen 1 µm und 100 µm, weiter bevorzugt zwischen 1 µm und 10 µm auf. Der Porendurchmesser der obersten Schicht der Membran, welcher die Filtrationseigenschaften der Membran definiert, kann je nach Einsatzgebiet zwischen 0,001 µm und 1 µm liegen. Insbesondere wenn der Porendurchmesser der äußersten Schicht der Membran weniger als 0,1 µm beträgt, weist die Membran bevorzugt mehrere Schichten mit jeweils nach außen hin kleiner werdendem Porendurchmesser auf. Die inneren Schichten der Membran dienen als Stützschicht für die äußerste Membranschicht.

Der Grundkörper kann beispielsweise auf Basis von Al₂O₃, TiO₂ und/oder ZrO₂ hergestellt werden. Die keramische Membran kann aus einer oder mehreren Schichten bestehen, welche auf Basis von Al₂O₃, TiO₂ und/oder ZrO₂ hergestellt werden.

Die Membran weist bevorzugt eine Porosität zwischen 20% und 70% auf, weiter bevorzugt zwischen 30% und 60% auf.

Die Herstellung der keramischen Filtrationsscheiben und die Ausgestaltung der Filtrationsscheiben sowie der Filtrationsanlage erfolgt bevorzugt wie in der DE 10 2016 011 672.2 beschrieben.

Insbesondere weisen die keramischen Filtrationsscheiben einen porösen keramischen Grundkörper und eine auf den Außenseiten des Grundkörpers angeordnete keramische Membran auf. Bevorzugt erfolgt die Herstellung dadurch, dass in einem ersten Schritt der Grundkörper geformt und gesintert wird, und dass in einem zweiten Schritt die Membran in eine oder mehreren Schichten als Schlicker auf den bereits gesinterten Grundkörper aufgebracht und zusammen mit dem Grundkörper nochmals gesintert wird.

In einer ersten Ausführungsform wird der Grundkörper im Gießverfahren hergestellt. Bevorzugt wird der Grünkörper für den Grundkörper im Gießverfahren aus einem Keramikschaum hergestellt. Insbesondere kann ein keramischer Schlicker mit einem Porosierungsmittel gemischt und in eine Gießform eingebracht werden, um den porösen Grundkörper als eine Schaumstruktur im Gießverfahren herzustellen. Bevorzugt erfolgt die Herstellung aus Keramikschaum dadurch, dass ein keramischer Schlicker eingesetzt wird, welcher durch Zumischung von Metallpasten und/oder Metallpulvern zu einem Keramikschaum aufschäumt. Bevorzugt wird dabei eine schlickerförmige Masse auf Aluminiumoxidbasis und/oder Aluminiumsilikatbasis unter Verwendung von γ - Al₂O₃ und üblichen Verflüssigungs-, Modifizierungs- und/oder Bindemitteln hergestellt, die Masse in einem Temperaturbereich zwischen 10°C und 100°C und pH-Werten von 5 bis 10 mit einer oder mehreren Metallpasten oder Metallpulvern gemischt, und das entstehende Gemisch in eine Gießform eingebracht. Bevorzugt wird erfindungsgemäß eine poröse und/oder saugfähige Gießform eingesetzt. Bevorzugt erfolgt die Herstellung im Gießverfahren so, wie dies in der DE 10 2008 015 271 A1 beschrieben ist. Das dort beschriebene Verfahren wird daher vollumfänglich zum Gegenstand der vorliegenden Anmeldung gemacht.

In einer alternativen Ausführungsform erfolgt die Herstellung des Grundkörpers im Trockenpressverfahren. Bevorzugt erfolgt dabei die Herstellung des Grünkörpers für den Grundkörper im Trockenpressverfahren aus einem keramischen Granulat. Insbesondere wird das keramische Granulat in einer Presse durch Druck verdichtet. Insbesondere handelt es sich dabei um eine uniaxiale Presse. Bevorzugt besteht das Granulat aus Hohlkugeln. Bevorzugt weisen diese einen Durchmesser zwischen 0,5 mm und 4 mm, weiter bevorzugt zwischen 1 mm und 2 mm auf. Bevorzugt wird zur Herstellung des Granulats zunächst ein keramisches Pulver mit organischen Additiven vermischt und in ein Sprüh-Trocknungsverfahren zu Granulat verarbeitet. Besonders bevorzugt wird die Mischung aus dem keramischen Pulver und den organischen Additiven mit Wasser verflüssigt und über eine Düse in einen Edelstahlturm gesprüht, in welchem bevorzugt eine Temperatur zwischen 100°C und 200°C herrscht. In der heißen Luft verdampft das Wasser, sodass sich ein Granulat in Form von Hohlkugeln bildet. Insbesondere entsteht so ein rieselfähiges und verdichtungsfähiges Material.

Im Rahmen der Herstellung des Grundkörpers wird das Granulat in eine Pressform gefüllt. Insbesondere handelt es sich dabei um eine Metallform. Die Pressform befindet sich in einem Pressautomaten, welcher die beiden Hälften der Form zusammenpresst. Anschließend fährt die Presse in eine geöffnete Stellung, und in der Pressform integrierte Auswerferstifte heben das gepresste Formteil aus der Pressform. Dieser Prozess kann sehr schnell ablaufen und ist gut automatisierbar, und somit ideal für eine Massenfertigung geeignet.

Ein so im Gießverfahren oder im Trockenpressverfahren hergestellter Grünkörper wird dann zunächst gesintert, bevor in einem zweiten Schritt eine oder mehrere Schichten Schlicker auf den bereits gesinterten Grundkörper aufgebracht und zusammen mit dem Grundkörper nochmals gesintert wird bzw. werden, um die Membran zu erzeugen.

Auch unabhängig von der Art der Herstellung des Grundkörpers wird die Membran bevorzugt im Tauchverfahren auf den Grundkörper aufgebracht. Hierdurch ergibt sich eine besonders einfache Möglichkeit, die die Membran bildenden Schlickerschichten auf den gesinterten Grundkörper aufzubringen.

Auch unabhängig von dem Herstellungsverfahren können die keramischen Schreiben geometrische und/oder konstruktive Optimierungen aufweisen.

In einer möglichen Ausführungsform weist mindestens eine und weisen bevorzugt beide Seitenflächen des Grundkörpers und/oder der Filtrationsscheibe Erhebungen und/oder Vertiefungen auf. Insbesondere ist es dabei möglich, dass die Filtrationsscheibe eine sich über ihre Erstreckung unterschiedliche Dicke aufweist, bspw. eine in radialer Richtung variierende Dicke. In einer möglichen Ausführungsform kann mindestens eine und können bevorzugt beide Seitenflächen des Grundkörpers Rillen aufweisen. Bevorzugt werden diese Erhebungen und/oder Vertiefungen durch eine entsprechende Geometrie der Guss- bzw. der Pressform erzeugt.

In einer weiteren Ausführungsform kann der Grundkörper und/oder die Filtrationsscheibe ein oder mehrere in axialer Richtung verlaufende Löcher aufweisen. Bevorzugt handelt es sich dabei um durch die Filtrationsscheibe hindurchgehende Löcher.

In einer möglichen Ausführungsform kann der Grundkörper innere Kanäle aufweisen, welche in die Axialbohrung münden. Solche inneren Kanäle erleichtern den Permeat-Abfluss. Die inneren Kanäle werden bevorzugt dadurch erzeugt, dass bei der Formung des Grundkörpers eine aus einem organischen Material bestehende Struktur in den Grünkörper des Grundkörpers eingebracht wird, welche dann beim Sintern des Grünkörpers des Grundkörpers ausgebrannt wird. Bevorzugt handelt es sich bei der aus einem organischen Material bestehenden Struktur dabei um eine Gitterstruktur. Insbesondere handelt es sich um eine zusammenhängende Gitterstruktur. In einer möglichen Ausführungsform der vorliegenden Erfindung kann es sich bei der aus einem organischen Material bestehenden Struktur um eine Kunststoffstruktur handeln.

In einer weiteren Ausführungsform kann der Grundkörper eine Verstärkungsstruktur aufweisen, welche bei der Formung des Grünkörpers des Grundkörpers in diesen eingebracht wird. Insbesondere handelt es sich dabei um eine keramische Verstärkungsstruktur, welche sich beim Sintern daher nicht mehr ändert. Insbesondere kann die Verstärkungsstruktur dabei aus keramischen Fasern bestehen. Eine solche Verstärkungsstruktur erlaubt die Herstellung eines besonders stabilen Grundkörpers. Durch die Struktur wird das Filtrationselement mechanisch verstärkt und wird so stabiler gegenüber mechanischen Belastungen. Besonders bevorzugt wird eine solche mechanische Verstärkung bei der Herstellung des Grundkörpers aus Schaumkeramik eingesetzt. Die mechanische Verstärkung vermeidet insbesondere einen kompletten Bruch der Filtrationsscheibe.

Die vorliegende Erfindung wird nun anhand von Ausführungsbeispielen sowie Zeichnungen näher beschrieben:
Dabei zeigen:
- Fig. 1:: ein erstes Ausführungsbeispiel für den Aufbau einer erfindungsgemäßen Filtrationsanlage, wie er bei allen Aspekten der vorliegenden Erfindung zum Einsatz kommen kann,
- Fig. 2a:: den erfindungsgemäßen Schritt der Begasung in einem Ausführungsbeispiel eines erfindungsgemäßen Verfahrens gemäß dem ersten Aspekt der vorliegenden Erfindung,
- Fig. 2b:: den Schritt der Filtration ein einem Ausführungsbeispiel eines erfindungsgemäßen Verfahrens gemäß dem ersten Aspekt der vorliegenden Erfindung,
- Fig. 3:: ein Ausführungsbeispiel einer erfindungsgemäßen Filtrationsanlage gemäß dem dritten Aspekt der vorliegenden Erfindung,
- Fig. 4:: ein Schnitt durch die Ebene A-A bei dem in Fig. 3 gezeigten Ausführungsbeispiel und
- Fig. 5:: ein Ausführungsbeispiel einer Filtrationsanlage gemäß dem vierten Aspekt der vorliegenden Erfindung.

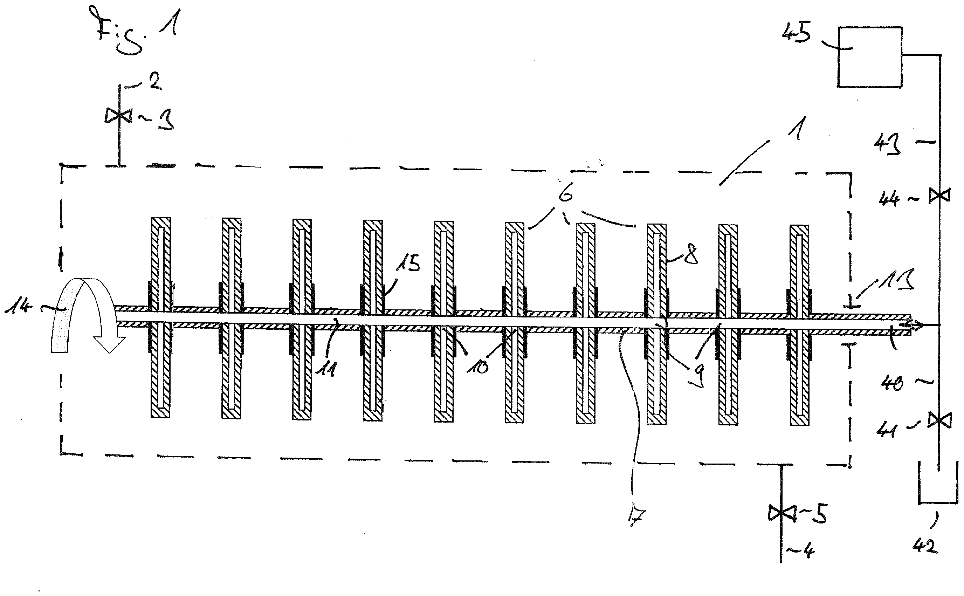

Fig. 1 zeigt in einem Ausführungsbeispiel den Aufbau einer Filtrationsanlage, wie er zur Verwirklichung sämtlicher Aspekte der vorliegenden Erfindung zum Einsatz kommen kann. Die Filtrationsanlage weist einen Behälter 1 auf, in welchem sich die zu filtrierende Flüssigkeit befindet. Im Ausführungsbeispiel ist ein Zulauf 2 mit einem Ventil 3 vorgesehen, über welchen die zu filtrierende Flüssigkeit in den Behälter 1 einströmt. Weiterhin ist ein Ablauf 4 mit einem Ventil 5 vorgesehen, über welchen das Retentat ablaufen kann. Bei dem Behälter 1 handelt es sich im Ausführungsbeispiel um einen Druckbehälter, welcher über die Ventile 3 und 5 gegenüber der Umgebung abgeschlossen werden kann.

In dem Behälter 1 ist eine Welle 7 mit mehreren Filtrationsscheiben 6 angeordnet. Die Filtrationsscheiben 6 weisen jeweils einen Grundkörper auf, welcher eine keramische Membran 8 trägt. Der Grundkörper kann beispielsweise aus einem porösen keramischen Material gefertigt sein und/oder Kanäle aufweisen, welche den Abfluss des Permeats vereinfachen. Die Filtrationsscheiben 6 weisen jeweils eine Axialbohrung 9 auf, durch welche die Welle 7 hindurch geht. Die Axialbohrung stellt den Permeatabfluss 10 der jeweiligen Filtrationsscheiben dar, und steht jeweils mit einem in der Welle 7 verlaufenden Abflusskanal 11 für das Permeat in Verbindung.

Im Ausführungsbeispiel ist die Welle 7 als Hohlwelle ausgeführt, so dass das Innere der Hohlwelle als Abflusskanal 11 dient. In den Bereichen, in welchen die Filtrationsscheiben 6 und die Wellenbohrung auf der Welle angeordnet sind, weist die Hohlwelle eine oder mehrere Öffnungen auf, welche die Axialbohrung der Filtrationsscheibe mit dem Inneren der Hohlwelle verbinden. Im Ausführungsbeispiel weisen die Filtrationsscheiben 6 jeweils Dichtungselemente 15 auf, welche die Axialbohrung auf der Welle gegenüber dem Behälter abdichten.

Die Filtrationsscheiben 6 sind starr auf der Welle 7 angeordnet und können daher durch eine Rotation der Wellen in Rotation versetzt werden. Hierfür ist der in Fig. 1 symbolisch dargestellte Antrieb 14 vorgesehen, über welchen die Welle angetrieben werden kann. Der Antrieb ist bevorzugt außerhalb des Behälters 1 angeordnet.

Die Filtrationsscheiben 6 sind innerhalb des Behälters 1 angeordnet, um die im Behälter 1 befindliche Flüssigkeit zu filtrieren. Die Welle ist im Bereich 13 aus dem Behälter 1 geführt, so dass das Permeat über das Innere der Welle und den Ausgang 12 der Welle abfließen kann. Im Ausführungsbeispiel steht der Ausgang 12 der Welle über eine Permeat-Abflussleitung 40 mit einem in Fig. 1 symbolisch dargestellten Auffangbehälter 42 für das Permeat in Verbindung. Im Ausführungsbeispiel ist in der Permeat-Abflussleitung 40 ein Ventil 41 vorgesehen.

Erfindungsgemäß weist die Filtrationsanlage - was in Fig. 1 nicht zu erkennen ist - mindestens zwei drehbare Wellen mit Filtrationsscheiben (6) auf, welche gemeinsam in dem Behälter (1) angeordnet sind.

Fig. 1 zeigt weiterhin Komponenten eines Ausführungsbeispiels einer Filtrationsanlage gemäß dem zweiten Aspekt der vorliegenden Erfindung. Dabei ist eine Druckgas-Versorgungseinrichtung 45 vorgesehen, welche über die Druckgasleitung 43 mit der Welle 7 in Verbindung steht. Die Druckgasleitung 43 steht im Ausführungsbeispiel mit dem Ausgang 12 der Welle 7 fluidisch in Verbindung. Dabei ist ein Ventil 44 in der Druckgasleitung vorgesehen, über welche die Verbindung zwischen der Welle und der Druckgas-Versorgungseinrichtung 45 geöffnet und geschlossen werden kann. Beispielsweise kann dabei der Ausgang 12 der Welle mit einer Leitungsverzweigung in Verbindung stehen, über welche die Druckgasleitung 43 und die Permeat-Abflussleitung 40 mit dem Ausgang 12 in Verbindung stehen.

Über die Druckgas-Versorgungseinrichtung 45 kann Gas über die Welle 7 und die Filtrationsscheiben 6 in die im Behälter 1 befindliche Flüssigkeit eingebracht werden. Durch das Austreten des Gases über die keramische Membran wird das Gas fein in der Flüssigkeit dispergiert. Das Gas kann in die Flüssigkeit 1 eingebracht werden, indem das Ventil 41 in der Permeat-Abflussleitung 40 geschlossen und das Ventil 44 in der Druckgasleitung 43 geöffnet wird. Für den Filtrationsbetrieb wird dagegen das Ventil 44 in der Druckgasleitung 43 geschlossen und das Ventil 41 in der Permeat-Abflussleitung geöffnet.

Da der Behälter 1 als Druckbehälter ausgeführt ist, kann die Begasung gleichzeitig den Filtrationsdruck erzeugen. Durch das eingebrachte Gas wird der für die Filtration nötige Druck in dem abgeschlossenen Behälter 1 erzeugt. Hierfür arbeitet die Filtrationsanlage bevorzugt in einem Batch-Modus. Dabei wird zunächst in einem ersten Schritt bei niedrigem Druck zu filtrierende Flüssigkeit über den Zulauf 2 in dem Behälter 1 geleitet und gegebenenfalls Retentat über den Ablauf 4 abgeführt. Nach dem Befüllen des Behälters 1 werden die Ventile 3 und 5 geschlossen. Daraufhin erfolgt eine Begasung, über welche der Druck im Behälter 1 erhöht wird. Dieser Druck kann dann in einem darauffolgenden Filtrationsschritt zur Filtration genutzt werden, da er die Flüssigkeit durch die keramischen Membran 8 der Filtrationsscheiben presst.

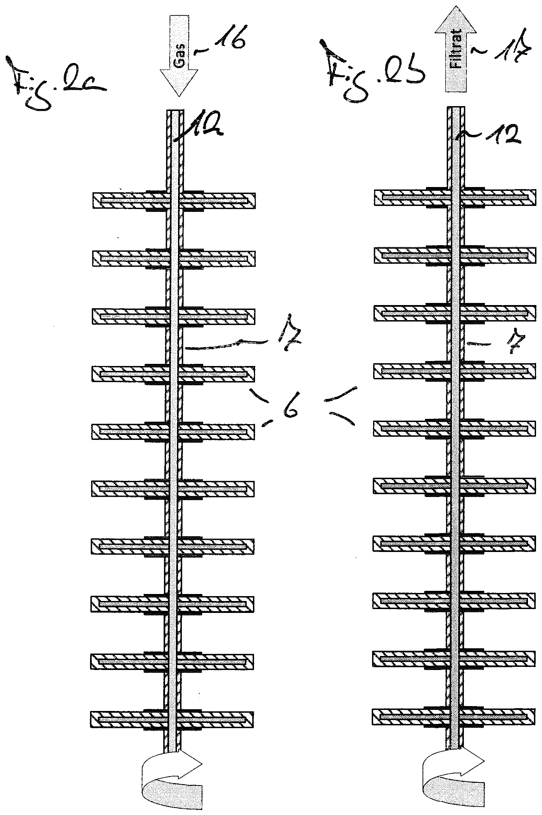

Die Filtrationsanlage gemäß Fig. 1 kann zur Durchführung eines Verfahrens gemäß dem ersten Aspekt der vorliegenden Erfindung eingesetzt werden. Die beiden Schritte eines erfindungsgemäßen Verfahrens gemäß dem ersten Aspekt sind dabei in Fig. 2a und 2b dargestellt. Das erfindungsgemäße Verfahren sieht eine alternierende Filtration und Begasung vor. Fig. 2a zeigt die Begasung. Dabei wird der Welle-Filtrationsscheiben-Aufbau verwendet, um über die Welle Gas 16 in das System zu speisen. Hierbei wird das Gas durch die poröse Filtrationsscheibe aus Keramik fein in der Lösung dispergiert. Fig. 2b zeigt dagegen die Filtration. Hierfür wird der Gasstrom abgestellt und über die umgekehrte Flussrichtung filtriert. Dies bedeutet, dass über die keramische Filtrationsscheibe das Permeat/Filtrat 17 über die Welle gewonnen wird. Erfindungsgemäß wird jeweils im Wechsel eine Welle zur Filtration und die andere Welle zur Begasung genutzt.

Wie in Fig. 2a und 2b dargestellt, können die Scheiben sowohl während der Begasung, als auch während der Filtration rotieren. Durch die Rotation der Scheiben wird eine Verwirbelung und Scherkraft erzeugt, welche insbesondere bei der Filtration die Deckschicht kontrolliert.

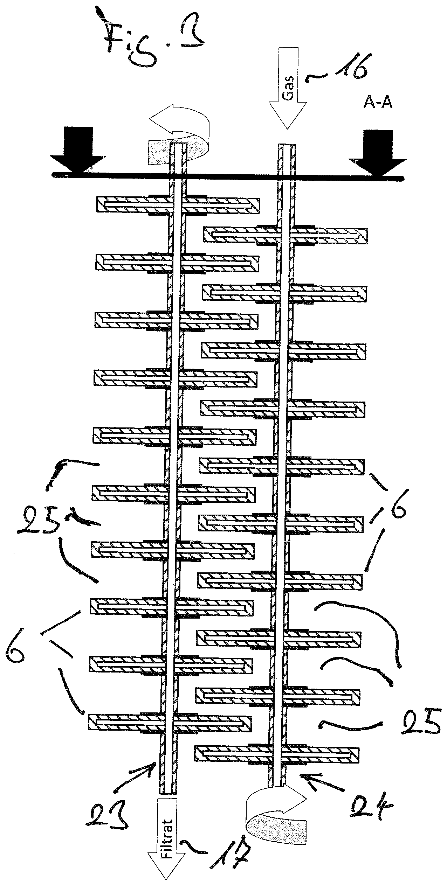

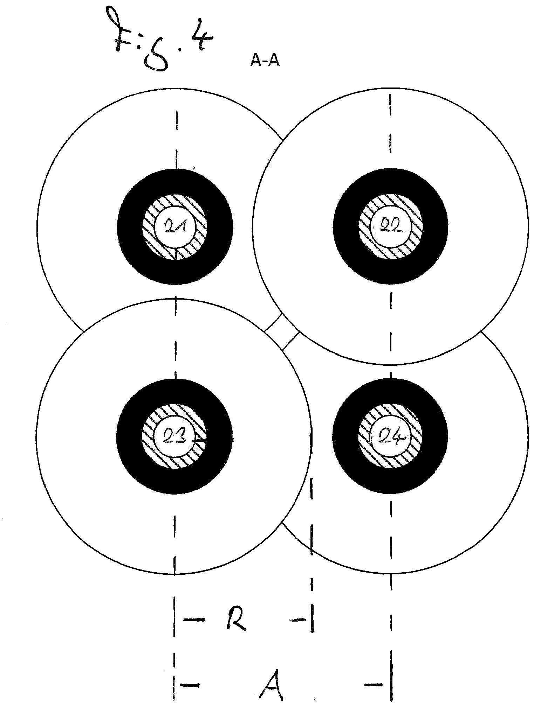

In Fig. 3 und 4 ist ein Ausführungsbeispiel einer Filtrationsanlage gemäß dem dritten Aspekt der vorliegenden Erfindung dargestellt. Dabei sind vier Wellen 21 bis 24 mit Filtrationsscheiben 6 vorgesehen. Wie in Fig. 4 dargestellt, sind die Achsen bei einem Blick in axialer Richtung in einem Quadrat angeordnet. Dabei ist der Abstand A zwischen den Achsen benachbarter Wellen kleiner als die Summe der Radien R der jeweiligen Filtrationsscheiben. Hierdurch wird eine teilweise Überlappung der benachbarten Scheiben erzeugt, durch welche die Verwirbelung und Scherkraft erhöht wird und ein besonders kompakter Aufbau erreicht wird. Wie in Fig. 4 dargestellt überlappen sich dabei die Filtrationsscheiben jeweils benachbarter Wellen, während die Filtrationsscheiben sich diagonal gegenüberliegender Wellen keinen Überlapp aufweisen.

Wie in Fig. 3 ersichtlich, wird der Überlapp dadurch ermöglicht, dass die Filtrationsscheiben 6 benachbarter Wellen in axialer Richtung versetzt an den Wellen angeordnet sind. Hierdurch greifen die Filtrationsscheiben 6 in die Zwischenräume 25 zwischen den Filtrationsscheiben 6 der benachbarten Welle ein.

Wie aus Fig. 4 ersichtlich, greifen die Filtrationsscheiben der Wellen 21 und 24 jeweils aus unterschiedlichen Richtungen in die Zwischenräume zwischen die Filtrationsscheiben der Wellen 22 und 23 ein und umgekehrt.

Im Rahmen der vorliegenden Erfindung können auch nur zwei Wellen vorgesehen sein, deren Filtrationsscheiben einander überlappen. Weiterhin können aber auch noch mehr als die vier in Fig. 4 dargestellten Wellen vorhanden sein. Beispielsweise wäre es denkbar, auf der in Fig. 4 freien Seite der Welle 23 weitere zwei Wellen vorzusehen, wobei deren Filtrationsscheiben ebenfalls mit den Filtrationsscheiben der Welle 23 überlappen. Der entsprechende Aufbau könnte auch in andere Richtungen beliebig erweitert werden.

Wie in Fig. 3 gezeigt, können benachbarte Wellen jeweils mit entgegengesetzter Drehrichtung rotieren. Dies verringert zwar die Scherkräfte im Bereich der Überlappung, reduziert aber gleichzeitig auch den Widerstand und damit die zur Rotation benötigte Energie. Bevorzugt können die Wellen sowohl mit entgegengesetzter, als auch mit gleicher Drehrichtung betrieben werden. Ein Betrieb mit gleicher Drehrichtung erhöht die Scherkräfte, und kann zur zusätzlichen Kontrolle der Deckschicht bei der Filtration eingesetzt werden.

Die Ausgestaltung gemäß dem dritten Aspekt, wie sie in Fig. 3 und 4 im Ausführungsbeispiel dargestellt ist, wird erfindungsgemäß mit dem ersten bzw. zweiten Aspekt kombiniert. Insbesondre wird eine alternierende Filtration und Begasung gemäß dem ersten Aspekt der vorliegenden Erfindung vorgenommen. Beispielsweise können in einer ersten Phase die Wellen 21 und 24 zur Begasung genutzt werden, während die Wellen 22 und 23 für die Filtration genutzt werden. Diese Phase ist in Fig. 3 dargestellt. Anschließend wird diese Aufteilung gewechselt, und Wellen 21 und 24 filtrieren während Wellen 22 und 23 begasen.

Die Wellen können hierfür jeweils mit einer Druckgasversorgung 45 in Verbindung stehen, wobei die Verbindung bevorzugt jeweils über ein schaltbares Ventil 44 erfolgt, wie dies in Fig. 1 dargestellt ist.

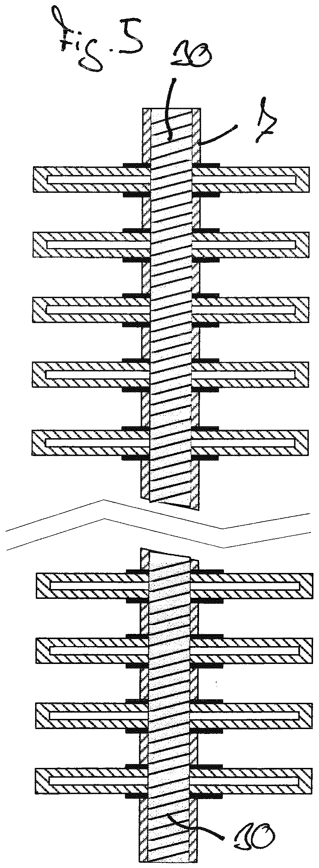

Fig. 5 zeigt ein Ausführungsbeispiel einer Filtrationsanlage gemäß dem vierten Aspekt der vorliegenden Erfindung. Hierfür ist die Welle 7 auf der Wellen-Innenseite mit einem Gewinde 30 versehen. Dieser Aufbau basiert auf dem archimedischen Prinzip und erleichtert den Abfluss des Filtrats bzw. Permeats aus der Welle. Eine solche Ausgestaltung ist insbesondere dann von Vorteil, wenn die Wellen vertikal ausgerichtet sind und der Permeatabfluss gegen die Schwerkraft erfolgt.

Die Filtrationsanlagen gemäß dem dritten und vierten Aspekt können ansonsten so aufgebaut werden, wie dies mit Bezug auf Fig. 1 bereits näher beschrieben wurde. Weiterhin ist eine Kombination der einzelnen Aspekte der vorliegenden Erfindung möglich, soweit die Merkmale der unabhängigen Ansprüche erfüllt sind.

## Patentansprüche

1. Verfahren zum Betrieb einer Filtrationsanlage mit einem Behälter (1), in welchen die zu filtrierende Flüssigkeit einströmt und/oder aus welchem das Retentat abströmt, und mit Filtrationsscheiben (6), welche in dem Behälter (1) auf einer drehbaren Welle (7) angeordnet sind, wobei die Filtrationsscheiben (6) jeweils einen Grundkörper, eine auf den Außenseiten des Grundkörpers angeordnete keramische Membran (8) und eine Axialbohrung (9) aufweisen, wobei die Axialbohrungen (9) den Permeat-Abfluss (10) der Filtrationsscheiben bilden und mit einem in der Welle (7) angeordneten Abflusskanal (11) in Verbindung stehen,
**dadurch gekennzeichnet,**
**dass** abwechselnd eine Filtration und eine Begasung der zu filtrierenden Flüssigkeit erfolgt, wobei bei der Filtration das Permeat (17) aus den Filtrationsscheiben (6) über die Welle (7) abfließt und bei der Begasung Gas (16) über die Welle (7) und die Filtrationsscheiben (6) in die zu filtrierende Flüssigkeit eingebracht wird, wobei die Filtrationsanlage mindestens zwei drehbare Wellen (21 - 24) mit Filtrationsscheiben (6) aufweist, welche gemeinsam in dem Behälter (1) angeordnet sind, wobei die beiden Wellen (21 - 24) bevorzugt parallel verlaufen, wobei jeweils im Wechsel die eine Welle (21 - 24) zur Filtration und die andere Welle (21 - 24) zur Begasung genutzt wird.

2. Verfahren nach Anspruch 1, wobei die Welle zumindest bei der Filtration rotiert.

3. Verfahren nach einem der vorangegangenen Ansprüche, wobei es sich bei dem Behälter (1) um einen Druckbehälter handelt, wobei der Filtrationsdruck in dem Druckbehälter zumindest teilweise über die Begasung erzeugt wird.

4. Verfahren nach Anspruch 3, wobei im Wechsel eine Befüllung des Druckbehälters (1) mit zu filtrierender Flüssigkeit bei einem ersten Druck und eine Filtration der im Druckbehälter (1) befindlichen Flüssigkeit bei einem zweiten, durch die Begasung erhöhten Druck erfolgt.

5. Verfahren nach einem der vorangegangenen Ansprüche, zum Betrieb einer Filtrationsanlage nach einem der folgenden Ansprüche.

6. Filtrationsanlage mit einem Behälter (1), in welchen die zu filtrierende Flüssigkeit einströmt und/oder aus welchem das Retentat abströmt, und mit mehreren Filtrationsscheiben (6), welche in dem Behälter (1) auf einer drehbaren Welle (7) angeordnet sind, wobei die Filtrationsscheiben (6) jeweils einen Grundkörper, eine auf den Außenseiten des Grundkörpers angeordnete keramische Membran (8) und eine Axialbohrung (9) aufweisen, wobei die Axialbohrungen den Permeat-Abfluss (10) der Filtrationsscheiben bilden und mit einem in der Welle (7) angeordneten Abflusskanal (11) in Verbindung stehen,
**gekennzeichnet durch**
eine Druckgas-Versorgungseinrichtung (45), welche mit der Welle (7) in Verbindung steht, so dass Gas über die Welle (7) und die Filtrationsscheiben (6) in die zu filtrierende Flüssigkeit eingebracht werden kann, wobei die Filtrationsanlage eine Steuerung mit einem Betriebsmodus aufweist, in welchem abwechselnd eine Filtration und eine Begasung der zu filtrierenden Flüssigkeit erfolgt, wobei bei der Filtration das Permeat aus den Filtrationsscheiben (6) über die Welle (7) abfließt und bei der Begasung Gas über die Welle (7) und die Filtrationsscheiben (6) in die zu filtrierende Flüssigkeit eingebracht wird, wobei die Filtrationsanlage mindestens zwei drehbare Wellen (21 - 24) mit Filtrationsscheiben (6) aufweist, welche gemeinsam in dem Behälter (1) angeordnet sind, wobei die beiden Wellen (21 - 24) bevorzugt parallel verlaufen, wobei jeweils im Wechsel die eine Welle (21 - 24) zur Filtration und die andere Welle (21 - 24) zur Begasung genutzt wird.

7. Filtrationsanlage nach Anspruch 6 zur automatischen Durchführung eines Verfahrens nach einem der Ansprüche 1 bis 5.

8. Filtrationsanlage nach Anspruch 6 oder 7, wobei die Filtrationsscheiben (6) auf den beiden Wellen (21 - 24) in axialer Richtung versetzt angeordnet sind und wobei bevorzugt die Filtrationsscheiben (6) der einen Welle in radialer Richtung in Zwischenräume (25) zwischen den Filtrationsscheiben (6) der anderen Welle hineinreichen.

9. Filtrationsanlage nach Anspruch 6, 7 oder 8, wobei die Filtrationsanlage mindestens vier drehbare Wellen (21 - 24) mit Filtrationsscheiben (6) aufweist, welche gemeinsam in dem Behälter (1) angeordnet sind, wobei die vier Wellen (21 - 24) bevorzugt parallel verlaufen.

10. Filtrationsanlage nach Anspruch 9, wobei die Wellen (21 - 24) in einem Viereck angeordnet sind, wobei die Filtrationsscheiben (6) auf benachbarten Wellen in axialer Richtung versetzt angeordnet sind, während die Filtrationsscheiben (6) auf sich diagonal gegenüberliegenden Wellen in axialer Richtung die gleiche Position aufweisen, wobei bevorzugt die Filtrationsscheiben (6) einer Welle in radialer Richtung jeweils in Zwischenräume (25) zwischen den Filtrationsscheiben (6) der beiden benachbarten Wellen eingreifen.

11. Filtrationsanlage nach einem der Ansprüche 6 bis 10, wobei die Wand des Abflusskanals (11) als ein Gewinde (30) ausgeführt ist.

12. Filtrationsanlage nach Anspruch 11, wobei die Drehrichtung der Welle so gewählt ist, dass das Gewinde (30) die Abführung des Permeats nach dem archimedischen Prinzip unterstützt, wobei bevorzugt die Welle (7) vertikal ausgerichtet ist und die Drehrichtung der Welle so gewählt wird, dass das Permeat entgegen der Schwerkraft nach dem archimedischen Prinzip abgeführt wird.

## Claims

1. Method for operating a filtration system comprising a vessel (1), into which the liquid to be filtered flows and/or out of which the retentate flows, and comprising filtration discs (6), which are arranged in the vessel (1) on a rotating shaft (7), the filtration discs (6) each having a main body, a ceramic membrane (8) arranged on the outer sides of the main body and an axial bore (9), the axial bores (9) forming the permeate drain (10) from the filtration discs and being connected to a drainage channel (11) arranged in the shaft (7),
**characterised in that**
a filtration and an aeration of the liquid to be filtered take place alternately, wherein during filtration the permeate (17) flows out of the filtration discs (6) via the shaft (7) and during aeration gas (16) is introduced into the liquid to be filtered via the shaft (7) and the filtration discs (6), wherein the filtration system has at least two rotating shafts (21-24) with filtration discs (6), the two shafts (21-24) being arranged together in the vessel (1) and preferably running in parallel, wherein in alternation the one shaft (21-24) is used for filtration and the other shaft (21-24) is used for aeration.

2. Method according to claim 1, wherein the shaft rotates at least during filtration.

3. Method according to one of the preceding claims, wherein the vessel (1) is a pressure vessel, the filtration pressure in the pressure vessel being at least partly generated by the aeration.

4. Method according to claim 3, wherein, in alternation, a filling of the pressure vessel (1) with liquid to be filtered takes place at a first pressure and a filtration of the liquid contained in the pressure vessel (1) takes place at a second pressure that has been raised by the aeration.

5. Method according to one of the preceding claims for operating a filtration system according to one of the following claims.

6. Filtration system comprising a vessel (1), into which the liquid to be filtered flows and/or out of which the retentate flows, and comprising a plurality of filtration discs (6), which are arranged in the vessel (1) on a rotating shaft (7), the filtration discs (6) each having a main body, a ceramic membrane (8) arranged on the outer sides of the main body and an axial bore (9), the axial bores forming the permeate drain (10) from the filtration discs and being connected to a drainage channel (11) arranged in the shaft (7),
**characterised by**
a compressed gas supply device (45), which is connected to the shaft (7), such that gas can be introduced into the liquid to be filtered via the shaft (7) and the filtration discs (6), wherein the filtration system has a control system with an operating mode in which a filtration and an aeration of the liquid to be filtered take place alternately, wherein during filtration the permeate flows out of the filtration discs (6) via the shaft (7) and during aeration gas is introduced into the liquid to be filtered via the shaft (7) and the filtration discs (6), wherein the filtration system has at least two rotating shafts (21-24) with filtration discs (6), the two shafts (21-24) being arranged together in the vessel (1) and preferably running in parallel, wherein in alternation the one shaft (21-24) is used for filtration and the other shaft (21-24) is used for aeration.

7. Filtration system according to claim 6 for the automatic performance of a method according to one of claims 1 to 5.

8. Filtration system according to claim 6 or 7, wherein the filtration discs (6) on the two shafts (21-24) are arranged offset in the axial direction and wherein preferably the filtration discs (6) of the one shaft extend in the radial direction into gaps (25) between the filtration discs (6) of the other shaft.

9. Filtration system according to claim 6, 7 or 8, wherein the filtration system has at least four rotating shafts (21-24) with filtration discs (6), the four shafts (21-24) being arranged together in the vessel (1) and preferably running in parallel.

10. Filtration system according to claim 9, wherein the shafts (21-24) are arranged in a quadrilateral, wherein the filtration discs (6) on adjacent shafts are arranged offset in the axial direction while the filtration discs (6) on diagonally opposite shafts have the same position in the axial direction, wherein preferably in each case the filtration discs (6) of one shaft extend in the radial direction into gaps (25) between the filtration discs (6) of the two adjacent shafts.

11. Filtration system according to one of claims 6 to 10, wherein the wall of the drainage channel (11) is designed as a screw thread (30).

12. Filtration system according to claim 11, wherein the direction of rotation of the shaft is chosen such that the screw thread (30) supports the discharge of the permeate in accordance with Archimedes' principle, wherein the shaft (7) is preferably vertically aligned and the direction of rotation of the shaft is chosen such that the permeate is discharged against the force of gravity in accordance with Archimedes' principle.

## Revendications

1. Procédé d'exploitation d'une installation de filtration comprenant un récipient (1), dans lequel le liquide à filtrer arrive et/ou à partir duquel le rétentat sort, et comprenant des disques de filtration (6), qui sont agencés dans le récipient (1) sur un arbre rotatif (7), les disques de filtration (6) présentant chacun un corps de base, une membrane céramique (8) agencée sur les côtés extérieurs du corps de base et un alésage axial (9), les alésages axiaux (9) formant l'écoulement de perméat (10) des disques de filtration et étant reliés à un canal d'écoulement (11) agencé dans l'arbre (7),
**caractérisé en ce que**
une filtration et un gazage du liquide à filtrer sont effectués alternativement, le perméat (17) s'écoulant à partir des disques de filtration (6) par le biais de l'arbre (7) lors de la filtration et du gaz (16) étant introduit dans le liquide à filtrer par le biais de l'arbre (7) et des disques de filtration (6) lors du gazage, l'installation de filtration présentant au moins deux arbres rotatifs (21 - 24) comprenant des disques de filtration (6), qui sont agencés ensemble dans le récipient (1), les deux arbres (21 - 24) étant de préférence parallèles, l'un des arbres (21 - 24) étant utilisé en alternance pour la filtration et l'autre arbre (21 - 24) pour le gazage.

2. Procédé selon la revendication 1, l'arbre tournant au moins lors de la filtration.

3. Procédé selon l'une quelconque des revendications précédentes, le récipient (1) consistant en un récipient sous pression, la pression de filtration dans le récipient sous pression étant générée au moins partiellement par le biais du gazage.

4. Procédé selon la revendication 3, un remplissage du récipient sous pression (1) avec le liquide à filtrer à une première pression et une filtration du liquide se trouvant dans le récipient sous pression (1) à une deuxième pression, augmentée par le gazage, étant effectués en alternance.

5. Procédé selon l'une quelconque des revendications précédentes, pour l'exploitation d'une installation de filtration selon l'une quelconque des revendications suivantes.

6. Installation de filtration comprenant un récipient (1), dans lequel le liquide à filtrer arrive et/ou à partir duquel le rétentat sort, et comprenant plusieurs disques de filtration (6), qui sont agencés dans le récipient (1) sur un arbre rotatif (7), les disques de filtration (6) présentant chacun un corps de base, une membrane céramique (8) agencée sur les côtés extérieurs du corps de base et un alésage axial (9), les alésages axiaux formant l'écoulement de perméat (10) des disques de filtration et étant reliés à un canal d'écoulement (11) agencé dans l'arbre (7),
**caractérisé par**
un dispositif d'alimentation en gaz comprimé (45), qui est relié à l'arbre (7), de telle sorte que du gaz peut être introduit dans le liquide à filtrer par le biais de l'arbre (7) et des disques de filtration (6), l'installation de filtration présentant une commande comprenant un mode d'exploitation dans lequel une filtration et un gazage du liquide à filtrer sont effectués alternativement, le perméat s'écoulant à partir des disques de filtration (6) par le biais de l'arbre (7) lors de la filtration et du gaz étant introduit dans le liquide à filtrer par le biais de l'arbre (7) et des disques de filtration (6) lors du gazage, l'installation de filtration présentant au moins deux arbres rotatifs (21 - 24) comprenant des disques de filtration (6), qui sont agencés ensemble dans le récipient (1), les deux arbres (21 - 24) étant de préférence parallèles, l'un des arbres (21 - 24) étant utilisé en alternance pour la filtration et l'autre arbre (21 - 24) pour le gazage.

7. Installation de filtration selon la revendication 6 pour la réalisation automatique d'un procédé selon l'une quelconque des revendications 1 à 5.

8. Installation de filtration selon la revendication 6 ou 7, les disques de filtration (6) étant agencés sur les deux arbres (21 - 24) de manière décalée dans la direction axiale et, de préférence, les disques de filtration (6) d'un arbre s'étendant dans la direction radiale dans des espaces intermédiaires (25) entre les disques de filtration (6) de l'autre arbre.

9. Installation de filtration selon la revendication 6, 7 ou 8, l'installation de filtration présentant au moins quatre arbres rotatifs (21 - 24) comprenant des disques de filtration (6), qui sont agencés ensemble dans le récipient (1), les quatre arbres (21 - 24) étant de préférence parallèles.

10. Installation de filtration selon la revendication 9, les arbres (21 - 24) étant agencés en un quadrilatère, les disques de filtration (6) sur des arbres voisins étant agencés de manière décalée dans la direction axiale, tandis que les disques de filtration (6) sur des arbres diagonalement opposés présentent la même position dans la direction axiale, les disques de filtration (6) d'un arbre s'engageant de préférence dans la direction radiale respectivement dans des espaces intermédiaires (25) entre les disques de filtration (6) des deux arbres voisins.

11. Installation de filtration selon l'une quelconque des revendications 6 à 10, la paroi du canal d'écoulement (11) est réalisée sous la forme d'un filetage (30).

12. Installation de filtration selon la revendication 11, la direction de rotation de l'arbre étant choisie de telle sorte que le filetage (30) favorise l'évacuation du perméat selon le principe d'Archimède, l'arbre (7) étant de préférence orienté verticalement et la direction de rotation de l'arbre étant choisie de telle sorte que le perméat est évacué à l'encontre de la force de pesanteur selon le principe d'Archimède.
